# EUROPEAN PATENT APPLICATION

(11) **EP 4 715 587 A1**
(43) Date of publication of application: **25.03.2026**
(21) Application number: 24219551.9
(22) Date of filing: 12.12.2024
(51) Int. Cl.: G06F 9/455

(54) **SAFE HYPERVISOR UPGRADES FOR REALTIME VIRTUAL MACHINES**

(30) Priority: 20.09.2024 US 202418891986
(71) Applicant: Red Hat, LLC, Raleigh, NC 27601 (US)
(72) Inventor: TSIRKIN, Michael, Raleigh, 27601 (US)
(74) Representative: Murgitroyd & Company

(57) **Abstract**

Aspects of the present disclosure relate to hypervisor upgrades for real-time virtual machines. More specifically, a method of the present disclosure includes initiating, at a computing device, a second instance of a management user space component of a hypervisor associated with a virtual machine, wherein a virtual processor associated with the virtual machine is operating in association with a first instance of the management user space component. The method includes initiating a migration of a state of the first instance of the management user space component to the second instance of the management user space component. The method includes attaching the second instance of the management user space component to a kernel component, wherein a state of the virtual processor is maintained by the kernel component.

## Description

### TECHNICAL FIELD

Aspects of the present disclosure relate to virtual machines, and more particularly, to safe hypervisor upgrades for real-time virtual machines.

### BACKGROUND

A virtual machine (VM) is software that creates an environment allowing for an abstraction of some physical components of a host computer system in order to allow running of various modules, for example, multiple operating systems, concurrently and in isolation from other modules. Virtualization permits, for example, consolidating multiple physical servers into one physical server running multiple VMs in order to enhance the hardware utilization rate. The host allocates a certain amount of its resources to each VM. Each VM can then use the allocated resources to execute applications, including operating systems (e.g., guest operating systems (OS)). A software layer providing the virtualization may be referred to as a hypervisor, a virtual machine monitor (VMM), or a kernel-based hypervisor, to name a few examples. The hypervisor emulates the underlying hardware of the host computer system, making the use of the VM transparent to the guest OS and the user of the VM. A VM may have a virtual processor, virtual system memory, virtual storage, and various virtual devices.

Virtual machine extension (VMX) operation is a processor operation designed to facilitate execution of VM. VMX may include two modes of processor operation: root mode and non-root mode. A transition from root mode into non-root mode is called VM entry, while a transition from non-root mode to root mode is called VM exit. Processor behavior in root mode is similar to conventional processor operation, while processor behavior in non-root mode is restricted and configured to facilitate virtualization. In non-root mode, a virtual machine control structure, is managed by the software layer providing the virtualization, and controls processor operation and determines how certain instructions behave. VMs or guest systems run in non-root mode.

### SUMMARY

According to a first aspect of the present disclosure there is provided a method, comprising: initiating, at a computing device, a second instance of a management user space component of a hypervisor associated with a virtual machine, wherein a virtual processor associated with the virtual machine is operating in association with a first instance of the management user space component; migrating a state of the first instance of the management user space component to the second instance of the management user space component; and attaching the second instance of the management user space component to a kernel component, wherein a state of the virtual processor is maintained by the kernel component.

The method may further comprise: maintaining operation of the virtual processor on the first instance of the management user space component, wherein control of the virtual processor is passed to the second instance of the management user space component with the virtual processor in an active operational state.

The method may further comprise: transferring control of the virtual machine in response to the attaching of the second instance of the management user space component to the kernel component, wherein the transferring the control of the virtual machine occurs without synchronization.

The method may further comprise: pausing operation of the virtual processor on the first instance of the management user space component in response to initiation of the migration of the state of the first instance of the management user space component to the second instance of the management user space component. The method may further comprise: executing a virtual machine enter process after the migration of the state of the first instance of the management user space component to the second instance of the management user space component.

The state of the first instance of the management user space component may comprise at least one of a virtual disk, a virtual network device, or other virtual resources.

The kernel component may be configured to transfer control of the virtual processor between the first instance of the management user space component and the second instance of the management user space component.

According to a second aspect of the present disclosure there is provided a system, comprising: a memory; and a processing device, operatively coupled to the memory, being configured to perform the method of the first aspect. The processing device is configured to: initiate, at a computing device, a second instance of a management user space component of a hypervisor associated with a virtual machine, wherein a virtual processor associated with the virtual machine is operating in association with a first instance of the management user space component; migrate a state of the first instance of the management user space component to the second instance of the management user space component; and attach the second instance of the management user space component to a kernel component, wherein a state of the virtual processor is maintained by the kernel component.

The processing device may further be configured to: maintain operation of the virtual processor on the first instance of the management user space component, wherein control of the virtual processor is passed to the second instance of the management user space component with the virtual processor in an active operational state.

The processing device may further be configured to: transfer control of the virtual machine in response to the attaching of the second instance of the management user space component to the kernel component, wherein the transferring the control of the virtual machine occurs without synchronization.

The processing device may further be configured to: pause operation of the virtual processor on the first instance of the management user space component in response to initiation of the migration of the state of the first instance of the management user space component to the second instance of the management user space component. The processing device may further be configured to: execute a virtual machine enter process after the migration of the state of the first instance of the management user space component to the second instance of the management user space component.

The state of the first instance of the management user space component may comprise at least one of a virtual disk, a virtual network device, or other virtual resources.

The kernel component may be configured to transfer control of the virtual processor between the first instance of the management user space component and the second instance of the management user space component.

According to a third aspect of the present disclosure there is provided a non-transitory computer-readable medium having instructions stored thereon which, when executed by a processing device, cause the processing device to perform the method of the first aspect. The instructions cause the processing device to: initiate, at a computing device, a second instance of a management user space component of a hypervisor associated with a virtual machine, wherein a virtual processor associated with the virtual machine is operating in association with a first instance of the management user space component; migrate a state of the first instance of the management user space component to the second instance of the management user space component; and attach the second instance of the management user space component to a kernel component, wherein a state of the virtual processor is maintained by the kernel component.

The instructions may further cause the processing device to: maintain operation of the virtual processor on the first instance of the management user space component, wherein control of the virtual processor is passed to the second instance of the management user space component with the virtual processor in an active operational state.

The non- instructions may further cause the processing device to: transfer control of the virtual machine in response to the attaching of the second instance of the management user space component to the kernel component, wherein the transferring the control of the virtual machine occurs without synchronization.

The instructions may further cause the processing device to: pause operation of the virtual processor on the first instance of the management user space component in response to initiation of the migration of the state of the first instance of the management user space component to the second instance of the management user space component. The instructions may further cause the processing device to: execute a virtual machine enter process after the migration of the state of the first instance of the management user space component to the second instance of the management user space component.

The state of the first instance of the management user space component may comprise at least one of a virtual disk, a virtual network device, or other virtual resources.

The kernel component may be configured to transfer control of the virtual processor between the first instance of the management user space component and the second instance of the management user space component.

### BRIEF DESCRIPTION OF THE DRAWINGS

The described aspects and the advantages thereof may best be understood by reference to the following description taken in conjunction with the accompanying drawings. These drawings in no way limit any changes in form and detail that may be made to the described aspects by one skilled in the art without departing from the spirit and scope of the described aspects.
FIG. 1 is a block diagram that illustrates an example system in accordance with some aspects of the present disclosure.
FIG. 2 is a block diagram that illustrates an example of upgrading a hypervisor for real-time virtual machines in accordance with some aspects of the present disclosure.
FIG. 3 is a block diagram that illustrates an example system in accordance with some aspects of the present disclosure.
FIG. 4 is a flow diagram of a method for upgrading a hypervisor for real-time virtual machines in accordance with some aspects of the present disclosure.
FIG. 5 is a block diagram of an example of a computer system that may perform one or more of the operations described herein in accordance with some aspects of the present disclosure.

### DETAILED DESCRIPTION

Hypervisors of virtual machines include multiple components with hard to predict latencies, such as external disk drives. Invoking the hypervisor upon a VM exit means that the virtual machine can also experience unpredictable latencies. Real-time virtual machines need to restrict such latencies, this is achieved by including a real time component in a hypervisor. Each VM exit request is either handled in the real-time kernel component, or moved to a special non real-time management host central processing unit and handled by a non-real-time management component (e.g., user space) while VM is re-entered and continues execution.

An issue may arise with VM migration. For example, migrating a VM to a new hypervisor may involve moving of an internal state of management components. As such, a VM state is saved by management component and resumed by a new management component, which may result in unpredictable latency from VM point of view and may be problematic with upgrades or local migrations. While remote migrations may be avoided or mitigated with reliable hardware, there is a need to upgrade software as well.

The present disclosure addresses the above-noted and other deficiencies by using a processing device to provide hypervisor upgrades for real-time virtual machines. In an example, a processing device initiates, at a computing device, a second instance of a management user space component of a hypervisor associated with a virtual machine, wherein a virtual processor associated with the virtual machine is operating in association with a first instance of the management user space component. The processing device migrates a state of the first instance of the management user space component to the second instance of the management user space component. The processing device attaches the second instance of the management user space component to a kernel component, wherein a state of the virtual processor is maintained by the kernel component. Vis-à-vis initiating the second instance of the management user space component of the hypervisor associated with the virtual machine, migrating the state of the first instance of the management user space component to the second instance of the management user space component, and attaching the second instance of the management user space component to the kernel component, the processing device may facilitate hypervisor upgrades for real-time virtual machines.

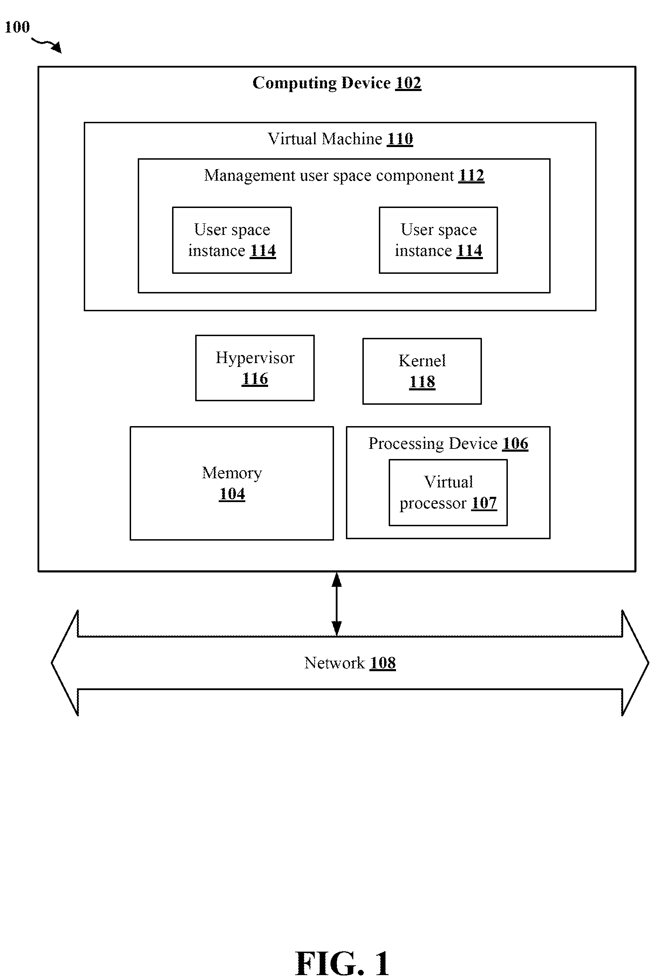

FIG. 1 is a block diagram that illustrates an example system 100 in accordance with some aspects of the present disclosure. The system 100 may include a computing device 102, memory 104, processing device 106, and a network 108. The computing device 102 may include hardware such as processing device 106 (e.g., processors, central processing units (CPUs)) and memory 104 (e.g., random access memory (RAM), hard-disk drive (HDD), persistent storage) as well as other hardware devices (e.g., network interfaces, sound card, video card, etc.- not shown). A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. The processing device 106 may be operatively coupled to the memory 104.

The computing device 102 may communicate with other devices via a network 108. The network may be a public network (e.g., the internet), a private network (e.g., a local area network (LAN) or wide area network (WAN)), or a combination thereof. In one example, the network may include a wired or a wireless infrastructure, which may be provided by one or more wireless communications systems, such as a WiFi^{™} hotspot connected with the network and/or a wireless carrier system that can be implemented using various data processing equipment, communication towers (e.g., cell towers), etc. The network 108 may carry communications (e.g., data, message, packets, frames, etc.) between the computing device 102 and the other devices. The computing device 102 may also include one or more sensors (e.g., temperature sensors, moisture sensors, etc. - not shown).

In some aspects, the computing device 102 may comprise any suitable type of computing device or machine that has a programmable processor (e.g., processing device 106 or virtual processor 107) including, for example, server computers, desktop computers, laptop computers, tablet computers, smartphones, set-top boxes, etc. In some examples, the computing device 102 may include a single machine or may include multiple interconnected machines (e.g., multiple servers configured in a cluster). The computing device 102 may be implemented by a common entity/organization or may be implemented by different entities/organizations. The computing device 102 may execute or include an operating system (OS). The OS may manage the execution of other components (e.g., software, applications, etc.) and/or may manage access to the hardware (e.g., processors, memory, storage devices etc.) of a device in the computing device 102.

The computing device 102 may further include a virtual machine 110, a management user space component 112, one or more user space instances 114, a hypervisor 116, and a kernel 118. Each of the virtual machine 110, management user space component 112, one or more user space instances 114, the hypervisor 116, and the kernel 118 may comprise software/logic stored on memory 104 that is executed by the processing device 106 and/or virtual processor 107 to perform their corresponding function. The virtual processor 107 is a processor associated with the virtual machine 110. In an example, the processing device and/or virtual processor may execute instructions to cause the hypervisor 116 to initiate the virtual machine 110 and provide the virtual machine 110 with access to one or more features of the hardware resources (e.g., processing device 106) of the computing device 102. In an example, the hypervisor 116 may run directly on the hardware resources of the computing device 102. In an example, the processing device and/or virtual processor may execute instructions to cause the virtual machine 110 to execute executable code based on an underlying emulation of hardware resources of the computing device 102. In an example, the processing device and/or virtual processor may execute instructions to cause the management user space component 112 to migrate a state of a first instance 114A of the user space instance 114 to a second instance 114B of the user space instance 114. In an example, the processing device may execute instructions to cause the kernel 118 to manage resources of the computing device 102.

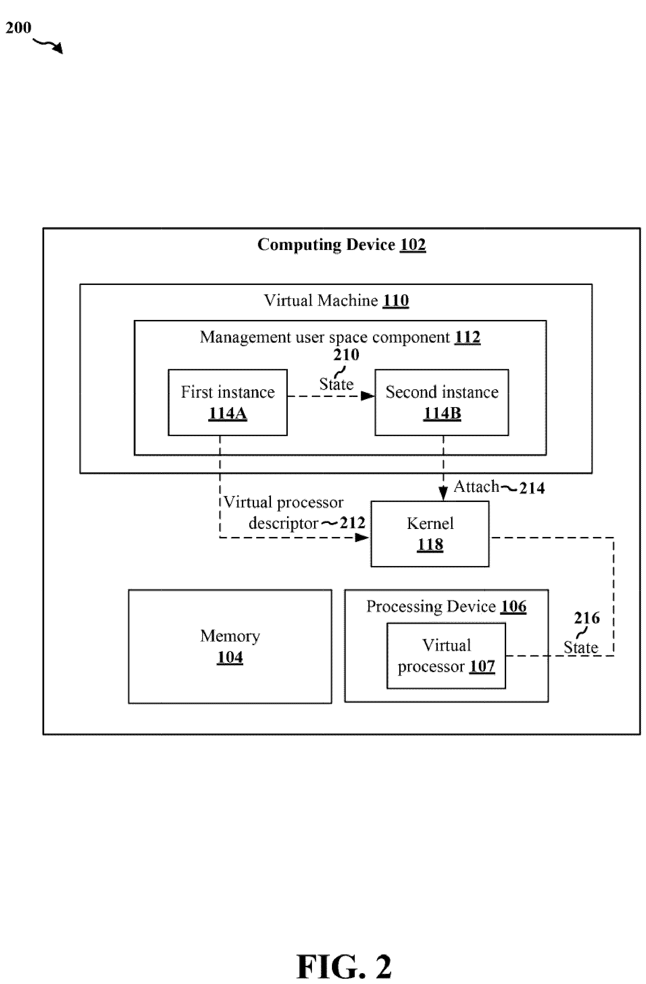

FIG. 2 is a block diagram 200 that illustrates the example system 100 of FIG. 1 in accordance with some aspects of the present disclosure. In the example depicted in FIG. 2, the kernel 118 may be configured to move control of the virtual processor 107 between instances of the management user space component 112. For example, one or more virtual processors may be attached to a virtual processor descriptor 212 that may be passed between a first instance 114A of the management user space component 112 and a second instance 114B of the management user space component 112. In some aspects, a state 210 of the virtual machine 110 may be saved which may indicate that the saved state 210 may be resumed locally at the second instance 114B of the management user space component 112. In such instances, instead of causing the one or more virtual processors to exit and saving their state, the one or more virtual processors are passed to the new management component (e.g., second instance 114B) in a running state. The new management component signals an attach 214 to the kernel to an already running virtual processor of the one or more virtual processors, while a state 216 of the virtual processor 107 may be provided to the kernel 118. At least one advantage of the disclosure may allow for local migrations without latency and/or downtime. As such, a real-time virtual processor that only exits to the kernel does not notice the switch between the first instance 114A and the second instance 114B of the management user space component 112, and real-time latency is not impacted. In some aspects, the virtual processor may not be a real-time processing device and may perform an operation that causes the virtual processor to exit to the hypervisor. In such instances, the virtual processor may be handled by saving the state and migrating the state to another instance of the management user space component.

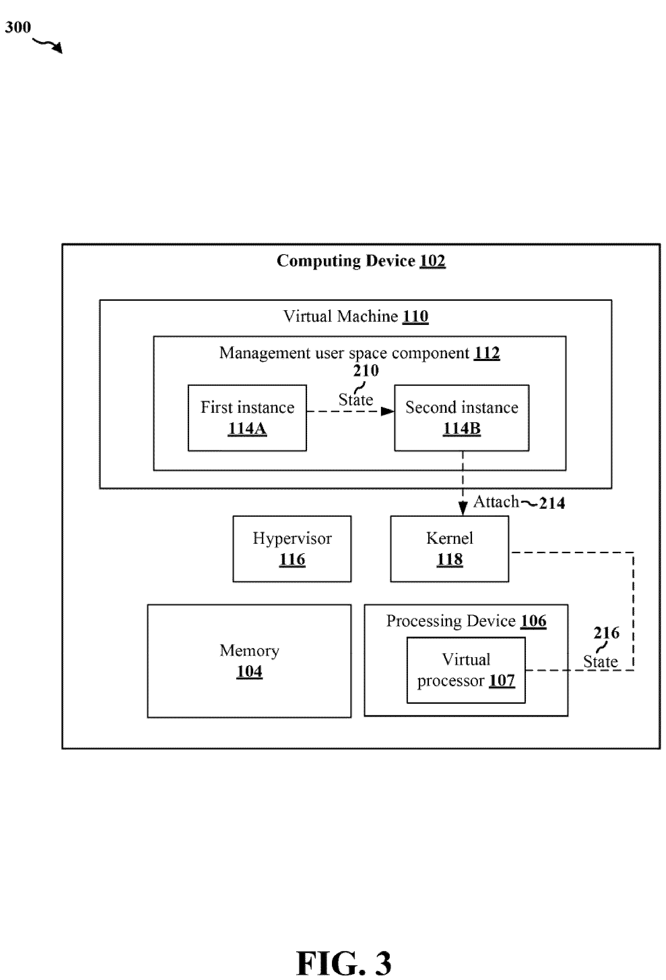

FIG. 3 is a block diagram 300 that illustrates the computing device 102 in accordance with some aspects of the present disclosure. The computing device 102 includes a memory 104 and a processing device 106. The processing device 106 is operatively coupled to the memory 104.

The processing device 106 is to initiate, at a computing device 102, a second instance 114B of a management user space component 112 of a hypervisor associated with a virtual machine 110, where a virtual processor 107 associated with the virtual machine 110 is operating in association with a first instance 114A of the management user space component 112. The processing device 106 is to migrate a state 210 of the first instance 114A of the management user space component 112 to the second instance 114B of the management user space component 112. The processing device 106 is to attach the second instance 114B of the management user space component 112 to a kernel component 118, where a state 216 of the virtual processor 107 is maintained by the kernel component 118.

In some aspects, the processing device 106 maintains operation of the virtual processor 107 on the first instance 114A of the management user space component, where control of the virtual processor is passed to the second instance 114B of the management user space component with the virtual processor in an active operational state.

In some aspects, the processing device 106 pauses operation of the virtual processor 107 on the first instance 114A of the management user space component in response to initiation of the migration of the state 210 of the first instance of the management user space component to the second instance 114B of the management user space component. In some aspects, the processing device 106 executes a virtual machine enter process after the migration of the state of the first instance of the management user space component to the second instance of the management user space component.

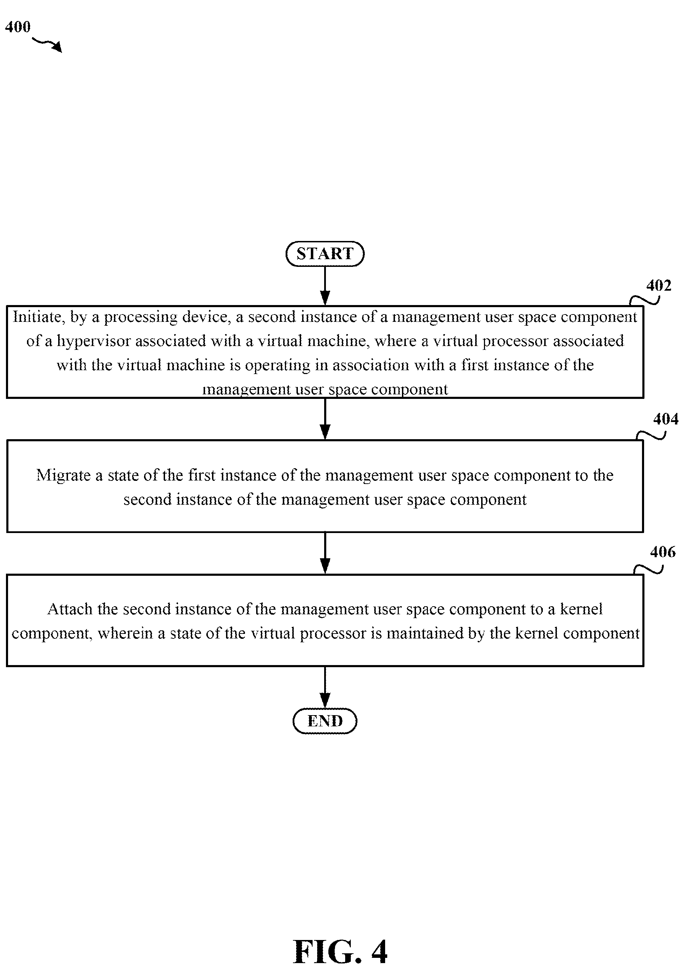

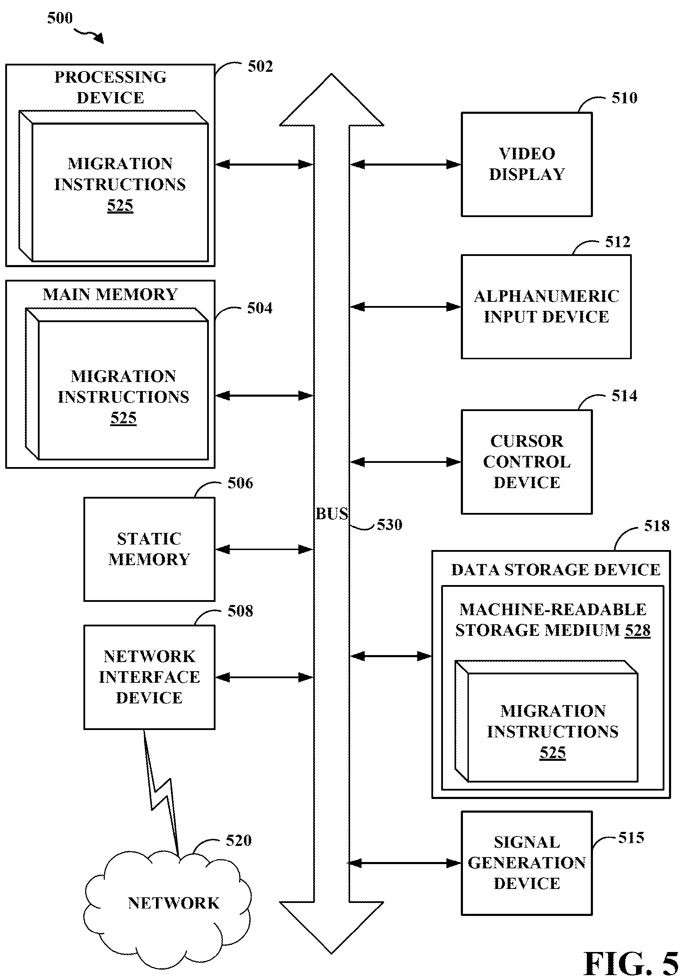

FIG. 4 is a flow diagram of a method 400 for upgrading a hypervisor for real-time virtual machines in accordance with some aspects of the present disclosure. The method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some aspects, the method 400 may be performed by a computing device (e.g., computing device 102). For instance, the method 400 may be performed by the processing device 106. In some aspects, the method 400 may be performed by the machine depicted in FIG. 5. In some aspects, the method 400 may be performed by a device depicted in FIG. 1

At block 402, a computing device (of a device), initiates a second instance of a management user space component of a hypervisor associated with a virtual machine, where a virtual processor associated with the virtual machine is operating in association with a first instance of the management user space component. In an example, the device may be the computing device 102. In an example, the management user space component may be the management user space component 112. In an example, the hypervisor may be the hypervisor 116. In an example, the virtual machine may be the virtual machine 110. In an example, the virtual processor may be or include the processing device 106 or virtual processor 107.

At block 404, the computing device, migrates a state of the first instance of the management user space component to the second instance of the management user space component. In an example, the first instance of the management user space component may be the first instance 114A or include the management user space component 112. In an example, the second instance of the management user space component may be the second instance 114B or include the management user space component 112.

At block 406, the computing device, attaches the second instance of the management user space component to a kernel component, where a state of the virtual processor is maintained by the kernel component. In an example, the kernel component may be the kernel 118.

In some aspects, the computing device maintains operation of the virtual processor on the first instance of the management user space component, where control of the virtual processor is passed or transitioned to the second instance of the management user space component while the virtual processor remains in an active operational state.

In some aspects, the computing device transfers control of the virtual machine in response to the attaching of the second instance of the management user space component to the kernel component, where the transfer of the control of the virtual machine occurs without synchronization.

In some aspects, the computing device pauses operation of the virtual processor on the first instance of the management user space component in response to an initiation of the migration of the state of the first instance of the management user space component to the second instance of the management user space component. In some aspects, the computing device executes a virtual machine enter process after migration of the state of the first instance of the management user space component to the second instance of the management user space component.

In some aspects, the state of the first instance of the management user space component comprises at least one of a virtual disk, a virtual network device, or other virtual resources. In some aspects, the kernel component is configured to transfer control of the virtual processor between the first instance of the management user space component and the second instance of the management user space component.

FIG. 5 illustrates a diagrammatic representation of a machine in the example form of a computer system 500 within which a set of instructions, for causing the machine to perform any one or more of the methodologies discussed herein for upgrading a hypervisor for real-time virtual machines. More specifically, the machine may initiate, at a computing device, a second instance of a management user space component of a hypervisor associated with a virtual machine, where a virtual processor associated with the virtual machine is operating in association with a first instance of the management user space component; migrate a state of the first instance of the management user space component to the second instance of the management user space component; and attach the second instance of the management user space component to a kernel component, wherein a state of the virtual processor is maintained by the kernel component.

In alternative aspects, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or a bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one aspect, the computer system 500 may be representative of a server.

The computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518, which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., a speaker). In one example, the video display unit 510, the alphanumeric input device 512, and the cursor control device 514 may be combined into a single component or device (e.g., an LCD touch screen).

The processing device 502 represents one or more general-purpose processing devices such as a microprocessor, a central processing unit, or the like. More particularly, the processing device 502 may be a complex instruction set computing (CISC) microprocessor, a reduced instruction set computer (RISC) microprocessor, a very long instruction word (VLIW) microprocessor, or a processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), a network processor, or the like. The processing device 502 is configured with migration instructions 525, for performing the operations and steps discussed herein. For example, the migration instructions 525 may include instructions for upgrading a hypervisor for real-time virtual machines.

The data storage device 518 may include a machine-readable storage medium 528 storing migration instructions 525 (e.g., software) embodying any one or more of the methodologies of functions described herein. The migration instructions 525 may also reside, completely or partially, within the main memory 504 or within the processing device 502 during execution thereof by the computer system 500; the main memory 504 and the processing device 502 also constituting machine-readable storage media. The migration instructions 525 may further be transmitted or received over the network 520 via the network interface device 508.

The machine-readable storage medium 528 may also be used to store the migration instructions 525 to perform a method for upgrading a hypervisor for real-time virtual machines, as described herein. While the machine-readable storage medium 528 is shown in an exemplary aspect to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, a magnetic storage medium (e.g., floppy diskette), an optical storage medium (e.g., CD-ROM), a magneto-optical storage medium, a read-only memory (ROM), random-access memory (RAM), erasable programmable memory (e.g., EPROM and EEPROM), flash memory, or another type of medium suitable for storing electronic instructions.

The preceding description sets forth numerous specific details such as examples of specific systems, components, methods, and so forth, in order to provide a good understanding of several aspects of the present disclosure. It will be apparent to one skilled in the art, however, that at least some aspects of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular aspects may vary from these exemplary details and still be contemplated to be within the scope of the present disclosure.

Additionally, some aspects may be practiced in distributed computing environments where the machine-readable medium is stored on and or executed by more than one computer system. In addition, the information transferred between computer systems may either be pulled or pushed across the communication medium connecting the computer systems.

Aspects of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another aspect, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an aspect" or "one aspect" or "an implementation" or "one implementation" throughout is not intended to mean the same aspect or implementation unless described as such. Furthermore, the terms "first," "second," "third," "fourth," etc. as used herein are meant as labels to distinguish among different elements and may not necessarily have an ordinal meaning according to their numerical designation. Unless specifically stated otherwise, terms such as "initiating," "migrating," "attaching," "maintaining," "transferring," "pausing," "executing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices.

It will be appreciated that variants of the above-disclosed and other features and functions, or alternatives thereof, may be combined into may other different systems or applications. Various presently unforeseen or unanticipated alternatives, modifications, variations, or improvements therein may be subsequently made by those skilled in the art which are also intended to be encompassed by the following claims. The claims may encompass aspects in hardware, software, or a combination thereof.

## Claims

1. A method, comprising:
initiating, at a computing device, a second instance of a management user space component of a hypervisor associated with a virtual machine, wherein a virtual processor associated with the virtual machine is operating in association with a first instance of the management user space component;
migrating a state of the first instance of the management user space component to the second instance of the management user space component; and
attaching the second instance of the management user space component to a kernel component, wherein a state of the virtual processor is maintained by the kernel component.

2. The method of claim 1, further comprising:
maintaining operation of the virtual processor on the first instance of the management user space component, wherein control of the virtual processor is passed to the second instance of the management user space component with the virtual processor in an active operational state.

3. The method of claim 1, further comprising:
transferring control of the virtual machine in response to the attaching of the second instance of the management user space component to the kernel component, wherein the transferring the control of the virtual machine occurs without synchronization.

4. The method of claim 1, further comprising:
pausing operation of the virtual processor on the first instance of the management user space component in response to initiation of the migration of the state of the first instance of the management user space component to the second instance of the management user space component.

5. The method of claim 4, further comprising:
executing a virtual machine enter process after the migration of the state of the first instance of the management user space component to the second instance of the management user space component.

6. The method of claim 1, wherein the state of the first instance of the management user space component comprises at least one of a virtual disk, a virtual network device, or other virtual resources.

7. The method of claim 1, wherein the kernel component is configured to transfer control of the virtual processor between the first instance of the management user space component and the second instance of the management user space component.

8. A system, comprising:
a memory; and
a processing device, operatively coupled to the memory, the processing device being configured to perform the method of any of claims 1-7.

9. A non-transitory computer-readable medium having instructions stored thereon which, when executed by a processing device, cause the processing device to perform the method of any of claims 1-7.
